# EUROPEAN PATENT SPECIFICATION

(11) **EP 3 914 821 B1**
(45) Date of publication and mention of the grant of the patent: **03.01.2024**
(21) Application number: 20702195.7
(22) Date of filing: 17.01.2020
(51) Int. Cl.: F02M 21/02, F02B 27/02, F02M 35/10

(54) **AIR:FUEL RATIO CONTROL IN A GAS ENGINE SUPPLIED WITH A WEAK FUEL GAS VIA A VENTURI MIXER**
STEUERUNG DES LUFT-KRAFTSTOFF-VERHÄLTNISSES IN EINEM GASMOTOR VERSORGT MIT GASFÖRMIGEM KRAFTSTOFF DURCH EINEN VENTURI MIXER
CONTRÔLE DU RAPPORT AIR:CARBURANT DANS UN MOTEUR À GAZ FOURNI AVEC UN GAZ DE CARBURANT FAIBLE VIA UN MÉLANGEUR VENTURI

(30) Priority: 21.01.2019 GB 201900805
(43) Date of publication of application: 01.12.2021
(73) Proprietor: Caterpillar Energy Solutions GmbH, 68167 Mannheim (DE)
(72) Inventor: SNUIS, Hans-Bernhard, 68723 Plankstadt (DE)
(74) Representative: Novagraaf Group
(86) International application number: PCT/EP2020/025017
(87) International publication number: WO 2020/151915

(56) References cited:
- EP-A1- 0 575 939
- EP-A2- 0 510 585
- DE-A1- 4 137 573
- GB-A- 2 544 325
- US-A1- 2014 102 422

## Description

### Technical Field

This disclosure relates to arrangements for controlling the air:fuel ratio in a gas engine supplied with fuel gas via a Venturi mixer, particularly for fuel gases having a low calorific value.

### Background

Gas engines are commonly supplied with fuel gas via a Venturi mixer which receives air and fuel gas at substantially equal pressure, maintaining a constant air:fuel ratio as the air flow rate changes with varying demand from the engine. The Venturi mixer is commonly configured as a gap mixer in which the fuel gas supply is fed through a gap into the air flowpath at an air:fuel ratio which is controllable by altering the axial length of the gap. Document EP 0 510 585 A2 shows a gas engine of the prior art.

The functional principle of a Venturi mixer imposes a practical lower limit on the air:fuel ratio supplied from the mixer.

Venturi mixers can be used with various fuel gases. Fuel gases having a relatively low calorific value by volume must be supplied to the engine at a relatively low air:fuel ratio by volume.

In order to provide a low air:fuel ratio (increasing the proportion of fuel gas per unit of air by volume) the throat of the Venturi may be narrowed relative to the upstream section area of the air inlet so as to increase the speed and reduce the static pressure of the airflow at the fuel gas inlet.

However, the reduced section area of the throat will result in an increased static pressure drop across the mixer which may restrict airflow to the engine when it is running at full speed. Conversely, if the throat is large enough to provide a mass flow rate adequate for full speed operation, the mixer may be unable to draw in sufficient fuel gas to supply the engine over its whole load profile, particularly when the air:fuel ratio must be reduced to enrich the mixture for full load operation or start-up.

These practical limitations make it difficult to use Venturi mixers with weak fuel gases requiring a low air:fuel ratio.

US 9,181,901 B2 discloses a gas carburettor for supplying producer gas at a low air:fuel ratio to an engine, wherein the producer gas and air are combined at a movable flapper plate upstream of a throat. The producer gas is supplied from a zero pressure regulator with a bypass across the regulator for supplying pressurised fuel gas to the carburettor during startup. After startup the bypass is closed and the carburettor provides a constant air:fuel ratio which is based on area ratio control and adjustable by means of the flapper plate.

### Summary

In a first aspect the present disclosure provides an apparatus for supplying a fuel gas from a fuel gas source to a gas engine, including a zero pressure regulator, a Venturi mixer, a mixture supply duct, and a valve.

The Venturi mixer includes a flowpath and a first fuel gas inlet. The flowpath has an air inlet region and a mixing region downstream of the air inlet region, and reduces in section area from the air inlet region to the mixing region. The first fuel gas inlet opens into the mixing region of the flowpath.

The zero pressure regulator is arranged to supply a fuel gas from the fuel gas source to the first fuel gas inlet at a first static pressure substantially equal to a static pressure of air supplied to the air inlet region of the flowpath.

The mixing region is arranged to mix the fuel gas flowing from the first fuel gas inlet with the air flowing from the air inlet region of the flowpath to form a mixture of fuel gas and air, and the mixture supply duct is arranged to receive the mixture of fuel gas and air flowing from the mixing region of the flowpath.

A second fuel gas inlet is arranged to open into the mixture supply duct downstream of the mixing region of the flowpath, and the valve is controllable to supply fuel gas from the fuel gas source at a second static pressure higher than the first static pressure, via the second fuel gas inlet, to the mixture of fuel gas and air flowing from the mixing region of the flowpath.

A controller is configured to control the valve to initiate or increase the supply of fuel gas from the fuel gas source via the second fuel gas inlet, during operation of the engine, responsive to an increased load condition of the engine.

In a related aspect, a method is provided for supplying a fuel gas from a fuel gas source to a gas engine by means of the novel apparatus, wherein the fuel gas is mixed with air in the mixing region, and the valve is controlled to supply fuel gas from the fuel gas source at a second static pressure higher than the first static pressure, via the second fuel gas inlet, to the mixture of fuel gas and air flowing from the mixing region of the flowpath.

### Brief Description of the Drawings

Further features and advantages will be appreciated from the following illustrative embodiments which will now be described, purely by way of example and without limitation to the scope of the claims, and with reference to the accompanying schematic drawings, in which:
Fig. 1 shows an apparatus comprising a Venturi gap mixer in accordance with a first embodiment;
Figs. 2 and 3 show the Venturi gap mixer in side view, respectively with the first fuel gas inlet in a slightly open condition (Fig. 2) and a maximally open condition (Fig. 3); and
Fig. 4 shows the Venturi gap mixer as seen from its outlet end.

Reference numerals and characters appearing in more than one of the figures indicate the same or corresponding features in each of them.

### Detailed Description

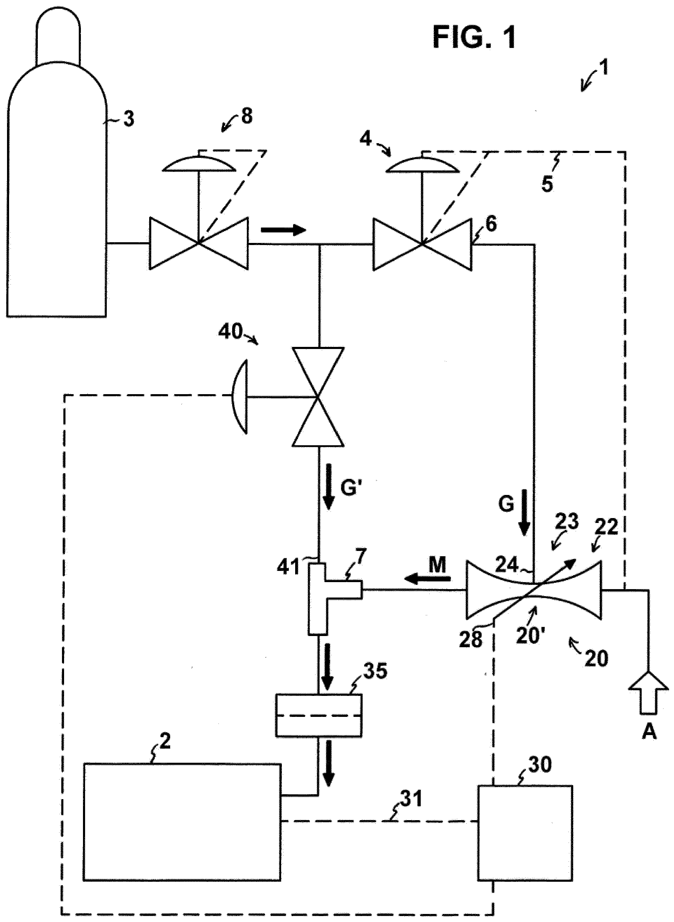

Referring to Fig. 1, an apparatus 1 is arranged to mix a fuel gas G from a fuel gas source 3 with combustion air A and supply the mixture M to a gas engine 2.

The fuel gas G may be a weak fuel gas, and the mixture M of fuel gas G and air A flowing from the mixing region of the flowpath may have an air:fuel gas ratio of not more than 2.3:1 by volume.

In this specification, a weak fuel gas means a fuel gas that has a calorific value less than 5kWh / Nm³. A normal cubic metre (Nm³) is defined as one cubic metre at a pressure of 1bar and a temperature of 0°C. In this specification, a gas engine means an internal combustion engine that is powered by a fuel gas, which is to say, a fuel that exists as a gas at ambient pressure and temperature and is supplied to the engine as a gas. The internal combustion engine may be a piston engine.

The fuel gas G may be stored before it is supplied to the engine 2 in gaseous form, optionally as a compressed gas. Alternatively the fuel gas may be supplied to the engine as it is produced.

The apparatus 1 includes a zero pressure regulator 4, a Venturi mixer 20, and a mixture supply duct 7.

The zero pressure regulator may be supplied with fuel gas G via an upstream regulator 8 which may reduce the static pressure of the fuel gas G, for example, from around 1bar - 8bar to around 30mbar - 300mbar.

The zero pressure regulator 4 regulates the static pressure of the fuel gas G to a value substantially equal to the static pressure of the combustion air A supplied to the Venturi mixer 20. This enables the Venturi mixer 20 to maintain a constant fuel: air ratio as the air flow rate changes with the speed of the engine 2.

The zero pressure regulator 4 may be mechanical or electrically controlled and may include an ambient air pressure sensing port or an air pressure sensing line 5 connected to the air supply at or upstream of the Venturi mixer. The sensed air pressure may act on a diaphragm of the zero pressure regulator to regulate the pressure of the fuel gas G at the outlet 6 of the zero pressure regulator, for example, to a value of about 0 - 0.5 mbar, as known in the art.

The Venturi mixer 20 includes a flowpath 21 which extends in a flow direction from an air inlet region 22 to a mixing region 23 downstream of the air inlet region. The flowpath 21 in the mixing region 23 may be substantially annular. The flowpath reduces (preferably, progressively) in section area from the air inlet region 22 to the mixing region 23 to define a Venturi 20'.

Combustion air A is supplied to the air inlet region 22 and flows from the air inlet region 22 to the mixing region 23. The reducing section area of the flowpath 21 causes the speed of the airflow to increase and the static pressure of the airflow to decrease.

A first fuel gas inlet 24 opens into the mixing region 23 of the flowpath. The first fuel gas inlet 24 may have a variable section area which is controllable to vary the air:fuel gas ratio of the mixture M.

The first fuel gas inlet 24 may be configured to substantially surround the flowpath 21, for example, as a substantially annular orifice (which is to say, an orifice that extends around at least most of the circumference or periphery of the flowpath 21) or as a plurality of orifices spaced apart angularly about the central axis of the flowpath 21.

The zero pressure regulator 4 is arranged to supply the fuel gas G from the fuel gas source 3 to the first fuel gas inlet 24 at a first static pressure substantially equal to the static pressure of the air A supplied to the air inlet region 22 of the flowpath.

The reduced static pressure of the air A in the mixing region 23 causes the fuel gas G to flow from the first fuel gas inlet 24 into the airstream at a mass flow rate proportional to the mass flow rate of the air A. In this way the Venturi mixer maintains a constant ratio of fuel to air by volume as the mass flow rate of the airflow changes with the speed of the engine.

The fuel gas G is mixed in the mixing region 23 with the air A flowing from the air inlet region 22 of the flowpath 21 to form a mixture M of fuel gas G and air A in the mixing region 23.

The fuel:air ratio may be varied by throttling the fuel gas flowpath, for example, by changing the section area of the fuel gas inlet 24.

The mixture supply duct 7 receives the mixture M of fuel gas and air flowing from the mixing region 23 of the flowpath 21 and delivers it directly or indirectly to the engine 2.

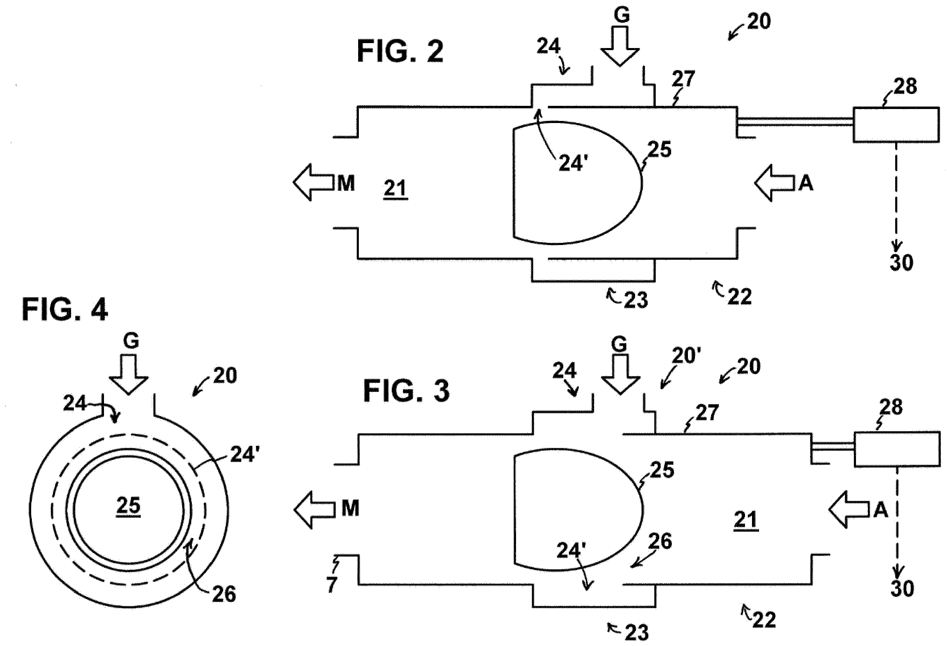

Figs. 2-4 show how the Venturi mixer may be configured as a gap mixer, wherein the first fuel gas inlet 24 comprises a substantially annular aperture 24' which opens into the annular flowpath 21 in the mixing region 23.

The annular flowpath may be defined between the (optionally, cylindrical) duct 27 which forms its outer wall, and a body 25 which is arranged centrally and coaxially in the flowpath 21 within the duct to define the inner wall of the flowpath in the mixing region, so that the air flows through the annular gap 26 between the periphery of the body 25 and the duct 27. The body 25 may define a surface of revolution about the axis of the duct 27 with a longitudinal section defining, for example, a truncated ellipse as shown in Figs. 2 and 3.

An annular flowpath may improve blending of the fuel gas G with the air A.

In addition, where as illustrated a downstream end of the body 25 is truncated, the truncated end may induce turbulence downstream of the mixing region 23 so as to further blend the fuel gas G with the air A.

The aperture 24' may have a variable length in an axial direction of the flowpath 21, wherein the length of the aperture is controllable, for example, by means of an actuator 28 operated by a controller 30, to vary the air:fuel gas ratio of the mixture M between a weaker mixture obtained by a slightly open position of the first fuel gas inlet 24 as shown in Fig. 2, and a richer mixture (which is to say, a mixture with a higher proportion of fuel gas to air) obtained in a fully open position of the first fuel gas inlet 24 as shown in Fig. 3.

As illustrated, the aperture 24' may be defined by a gap between the facing ends of respective, upstream and downstream portions of the duct 27 defining the flowpath 21, wherein the upstream and downstream portions can be moved together and apart relative to one another in the axial direction of the duct 27 so as to change the section area of the fuel gas inlet 24 by changing the axial length of the gap.

A valve 40, also referred to herein as an enrichment valve, is arranged to enrich the mixture M with additional fuel gas G' via a second fuel gas inlet 41 which opens into the mixture supply duct 7 downstream of the mixing region 23 of the flowpath. The second fuel gas inlet 41 may comprise a nozzle or injector for introducing the additional fuel gas G' into the mixture M or may be formed simply as a pipe junction.

The enrichment valve may be arranged as shown to bypass the zero pressure regulator 4.

The enrichment valve 40 is controlled to supply the additional fuel gas G' from the fuel gas source 3 at a second static pressure higher than the first static pressure of the gas supplied from the zero pressure regulator, via the second fuel gas inlet, to the mixture M of fuel gas and air flowing from the mixing region 23 of the flowpath to the engine. In the illustrated example, the second static pressure is defined by the upstream pressure regulator 8. The relatively higher static pressure of the additional fuel gas G' causes the additional fuel gas G' to flow into the mixture M at a flow rate that is controllable by selecting the second static pressure and the setting of the valve 40.

In practice it is found that good combustion of the enriched mixture can be obtained despite the introduction of additional fuel gas G downstream of the Venturi mixer 20, hence without blending in the mixer. This may reflect the blending of the mixture M in the Venturi mixer, wherein the blended mixture M may initiate combustion of the additional fuel gas G' in the engine 2. Combustion may be initiated in the engine by spark ignition or by pressure ignition of pilot fuel from a pilot fuel source such as a fuel injector, as known in the art.

A turbulator 35 (which is to say, a device for inducing turbulence in a flow of fluid) may be arranged in the mixture supply duct 7 downstream of the second fuel gas inlet 41. The turbulator 35 helps to blend the fuel gas G' flowing from the second fuel gas inlet 41 with the mixture M flowing from the Venturi mixer, providing a homogeneous mixture M for further improved combustion. The turbulator 35 may comprise for example a perforated plate or any other suitable device as known in the art.

A controller 30 is provided for controlling the enrichment valve 40. The controller 30 may also control the flow of fuel gas G entering the Venturi mixer, for example, by controlling the actuator 28 to vary the section area of the first fuel gas inlet 24.

The controller may comprise an electronic control unit having software stored in memory and running on a processor as known in the art.

The controller may send and/or receive signals 31 to and/or from the engine 2, and may incorporate or form part of an engine control unit which regulates the operation of the engine 2. The controller may receive further input signals from sensors (not shown), for example, sensing the temperature or composition of an exhaust gas stream from the engine and other operational parameters.

The controller 30 may be configured to control the enrichment valve 40 to initiate or increase the supply of additional fuel gas G' from the fuel gas source 3 via the second fuel gas inlet 41, during operation of the engine 2, responsive to an increased load condition of the engine 2. The controller 30 may sense the load condition directly from the engine or from the load; for example, where the engine 2 drives a generator, the controller 30 may sense the load on the generator.

The enrichment valve 40 may be opened from a closed condition, responsive to the sensed load condition of the engine, to initiate the supply of additional fuel gas G' when the engine load increases above a threshold limit.

The controller 30 may be further configured to control the enrichment valve 40 to supply additional fuel gas G' from the fuel gas source 3 via the second fuel gas inlet 41 when the engine 2 is started from an inactive condition.

The controller 30 is configured to control the variable section area of the first fuel gas inlet 24 to vary the air:fuel gas ratio of the mixture M flowing from the mixing region 23 of the flowpath 21, and, during operation of the engine 2, to initiate the supply of additional fuel gas G' via the second fuel gas inlet 41 only in a maximally open condition of the first fuel gas inlet 24, for example, as shown in Fig. 3.

The enrichment valve 40 may be openable and closable by a motor or other actuator and may be controllable by the controller 30, e.g. by proportional or PID control, to supply additional fuel gas G' to the mixture M in the mixture supply duct 7 at a selectable, variable flow rate responsive to the changing load on the engine 2. The controller 30 may control the valve 40 to reduce the flow of additional fuel gas G' responsive to a reduction in the load on the engine 2, or to stop the flow of additional fuel gas G' when the load on the engine 2 falls below a threshold value corresponding to that at which the Venturi mixer is capable of supplying sufficient fuel gas G to satisfy the demand of the engine 2.

### Industrial Applicability

The enrichment valve 40 may be controlled to initiate the supply of additional fuel gas G' to the engine 2 when the engine demands fuel gas at a rate greater than the maximum fuel gas flow rate available from the Venturi mixer. Thus, the apparatus makes it possible to run the engine on a weak fuel gas with automatic regulation of the fuel supply by means of a Venturi mixer in most operating states of the engine, without limiting the maximum power output or speed of the engine.

The supply of additional fuel gas G' may be stopped when the engine demand for fuel gas falls below the maximum fuel gas flow rate available from the Venturi mixer. Thus, in operation of the engine, the fuel gas supply rate can be automatically controlled by the Venturi mixer responsive to changing engine speed, with the air:fuel ratio supplied from the Venturi mixer being selected by the controller 30 responsive to engine load, up to a threshold limit of engine load, above which the enrichment valve 40 begins to open.

In summary, a gas engine is supplied with weak fuel gas via a zero pressure regulator feeding a Venturi mixer, with an enrichment valve being arranged to supply additional fuel gas downstream of the mixer, for example, responsive to increased load on the engine.

Those skilled in the art will appreciate that further adaptations are possible within the scope of the claims.

In the claims, reference numerals and characters in parentheses are provided, purely for ease of reference, and should not be construed as limiting features.

## Claims

1. An apparatus (1) for supplying a fuel gas (G, G') from a fuel gas source (3) to a gas engine (2), including:
a zero pressure regulator (4),
a Venturi mixer (20),
a mixture supply duct (7),
a valve (40), and
a controller (30);
the Venturi mixer (20) being a gap mixer and including a flowpath (21) and a first fuel gas inlet (24);
the flowpath (21) having an air inlet region (22) and a mixing region (23) downstream of the air inlet region (22), the flowpath (21) reducing in section area from the air inlet region (22) to the mixing region (23);
the first fuel gas inlet (24) opening into the mixing region (23) of the flowpath;
the zero pressure regulator (4) being arranged to supply a fuel gas (G) from the fuel gas source (3) to the first fuel gas inlet (24) at a first static pressure substantially equal to a static pressure of air (A) supplied to the air inlet region (22) of the flowpath;
the mixing region (23) being arranged to mix the fuel gas (G) flowing from the first fuel gas inlet (24) with the air (A) flowing from the air inlet region (22) of the flowpath (21) to form a mixture (M) of fuel gas and air;
the mixture supply duct (7) being arranged to receive the mixture (M) of fuel gas and air flowing from the mixing region (23) of the flowpath;
wherein a second fuel gas inlet (41) is arranged to open into the mixture supply duct (7) downstream of the mixing region (23) of the flowpath,
and the valve (40) is controllable to supply fuel gas (G') from the fuel gas source (3) at a second static pressure higher than the first static pressure, via the second fuel gas inlet (41), to the mixture (M) of fuel gas and air flowing from the mixing region (23) of the flowpath;
the controller (30) being configured to control the valve (40) to initiate or increase the supply of fuel gas (G') from the fuel gas source (3) via the second fuel gas inlet (41), during operation of the engine (2), responsive to an increased load condition of the engine (2);
**characterised in that**
the Venturi mixer (20) is arranged to form the mixture (M) of fuel gas and air flowing from the mixing region (23) of the flowpath (21) with an air:fuel gas ratio of not more than 2.3:1 by volume; and
the flowpath (21) in the mixing region (23) is substantially annular, and
the first fuel gas inlet (24) comprises a substantially annular aperture (24'), the aperture (24') having a variable length in an axial direction of the flowpath (21), the length of the aperture (24') being controllable to vary an air:fuel gas ratio of the mixture (M); and
the controller (30) is configured to control the length of the aperture (24') to vary an air:fuel gas ratio of the mixture (M) flowing from the mixing region (23) of the flowpath (21), and, during operation of the engine (2), to initiate the supply of fuel gas (G') via the second fuel gas inlet (40) only in a maximally open condition of the first fuel gas inlet (24).

2. An apparatus according to claim 1, wherein the controller (30) is further configured to control the valve (40) to supply fuel gas (G') from the fuel gas source (3) via the second fuel gas inlet (41) when the engine (2) is started from an inactive condition.

3. An apparatus according to claim 1, further including a turbulator (35) arranged in the mixture supply duct (7) downstream of the second fuel gas inlet (41).

4. A method for supplying a fuel gas (G, G') from a fuel gas source (3) to a gas engine (2), including:
providing a zero pressure regulator (4),
a Venturi mixer (20),
a mixture supply duct (7),
a valve (40), and
a controller (30);
the Venturi mixer (20) being a gap mixer and including a flowpath (21) and a first fuel gas inlet (24);
the flowpath (21) having an air inlet region (22) and a mixing region (23) downstream of the air inlet region (22), the flowpath (21) reducing in section area from the air inlet region (22) to the mixing region (23);
the first fuel gas inlet (24) opening into the mixing region (23) of the flowpath;
arranging the zero pressure regulator (4) to supply a fuel gas (G) from the fuel gas source (3) to the first fuel gas inlet (24) at a first static pressure substantially equal to a static pressure of air (A) supplied to the air inlet region (22) of the flowpath;
mixing the fuel gas (G) flowing from the first fuel gas inlet (24) with the air (A) flowing from the air inlet region (22) of the flowpath (21) to form a mixture (M) of fuel gas and air in the mixing region (23);
arranging the mixture supply duct (7) to receive the mixture (M) of fuel gas and air flowing from the mixing region (23) of the flowpath;
arranging a second fuel gas inlet (41) to open into the mixture supply duct (7) downstream of the mixing region (23) of the flowpath,
and controlling the valve (40) to supply fuel gas (G') from the fuel gas source (3) at a second static pressure higher than the first static pressure, via the second fuel gas inlet (41), to the mixture (M) of fuel gas and air flowing from the mixing region (23) of the flowpath;
configuring the controller (30) to control the valve (40) to initiate or increase the supply of fuel gas (G') from the fuel gas source (3) via the second fuel gas inlet (41), during operation of the engine (2), responsive to an increased load condition of the engine (2); and
**characterised by**
forming the mixture (M) of fuel gas and air flowing from the mixing region (23) of the flowpath (21) with an air:fuel gas ratio of not more than 2.3:1 by volume; and
arranging the flowpath (21) in the mixing region (23) to be substantially annular, and
arranging the first fuel gas inlet (24) to comprise a substantially annular aperture (24'), the aperture (24') having a variable length in an axial direction of the flowpath (21); and
configuring the controller (30):
- to control the length of the aperture (24') to vary an air:fuel gas ratio of the mixture (M) flowing from the mixing region (23) of the flowpath (21), and, during operation of the engine (2),
- to initiate the supply of fuel gas (G') via the second fuel gas inlet (40) only in a maximally open condition of the first fuel gas inlet (24).

## Patentansprüche

1. Vorrichtung (1) zum Zuführen eines Brenngases (G, G') von einer Brenngasquelle (3) zu einem Gasmotor (2), die einschließt:
einen Nulldruckregler (4),
einen Venturi-Mischer (20),
einen Mischungszufuhrkanal (7),
ein Ventil (40) und
eine Steuerung (30);
wobei der Venturi-Mischer (20) ein Spaltmischer ist und einen Strömungsweg (21) und einen ersten Brenngaseinlass (24) einschließt;
wobei der Strömungsweg (21) eine Lufteinlassregion (22) und eine Mischregion (23) stromabwärts der Lufteinlassregion (22) aufweist, wobei sich der Strömungsweg (21) in einem Abschnittsbereich von der Lufteinlassregion (22) zu der Mischregion (23) reduziert;
wobei der erste Brenngaseinlass (24) in die Mischregion (23) des Strömungswegs mündet;
wobei der Nulldruckregler (4) angeordnet ist, um ein Brenngas (G) von der Brenngasquelle (3) zu dem ersten Brenngaseinlass (24) bei einem ersten statischen Druck zuzuführen, der im Wesentlichen gleich einem statischen Druck von Luft (A) ist, die der Lufteinlassregion (22) des Strömungswegs zugeführt wird;
wobei die Mischregion (23) angeordnet ist, um das Brenngas (G), das von dem ersten Brenngaseinlass (24) strömt, mit der Luft (A) zu mischen, die von der Lufteinlassregion (22) des Strömungswegs (21) strömt, um eine Mischung (M) von Brenngas und Luft auszubilden;
wobei der Mischungszufuhrkanal (7) angeordnet ist, um die Mischung (M) von Brenngas und Luft aufzunehmen, die von der Mischregion (23) des Strömungswegs strömt;
wobei ein zweiter Brenngaseinlass (41) angeordnet ist, um in den Mischungszufuhrkanal (7) stromabwärts der Mischregion (23) des Strömungswegs zu münden,
und das Ventil (40) steuerbar ist, um Brenngas (G') von der Brenngasquelle (3) mit einem zweiten statischen Druck, der höher als der erste statische Druck ist, über den zweiten Brenngaseinlass (41) zu der Mischung (M) von Brenngas und Luft zuzuführen, die von der Mischregion (23) des Strömungswegs strömt;
wobei die Steuerung (30) konfiguriert ist, um das Ventil (40) zu steuern, um die Zufuhr von Brenngas (G') von der Brenngasquelle (3) über den zweiten Brenngaseinlass (41) während eines Betriebs des Motors (2) als Reaktion auf einen erhöhten Lastzustand des Motors (2) einzuleiten oder zu erhöhen;
**dadurch gekennzeichnet, dass**
der Venturi-Mischer (20) angeordnet ist, um die Mischung (M) von Brenngas und Luft, die aus der Mischregion (23) des Strömungswegs (21) strömt, mit einem Luft: Brenngas-Verhältnis von nicht mehr als 2,3 : 1 nach Volumen auszubilden; und
der Strömungsweg (21) in der Mischregion (23) im Wesentlichen ringförmig ist, und
der erste Brenngaseinlass (24) eine im Wesentlichen ringförmige Öffnung (24') umfasst, wobei die Öffnung (24') eine variable Länge in einer axialen Richtung des Strömungswegs (21) aufweist, wobei die Länge der Öffnung (24') steuerbar ist, um ein Luft: Brenngas-Verhältnis der Mischung (M) zu variieren; und
die Steuerung (30) konfiguriert ist, um die Länge der Öffnung (24') zu steuern, um ein Luft : Brenngas-Verhältnis der Mischung (M), die von der Mischregion (23) des Strömungswegs (21) strömt, zu variieren, und während des Betriebs des Motors (2), um die Zufuhr von Brenngas (G') über den zweiten Brenngaseinlass (40) nur in einem maximal offenen Zustand des ersten Brenngaseinlasses (24) einzuleiten.

2. Vorrichtung nach Anspruch 1, wobei die Steuerung (30) ferner konfiguriert ist, um das Ventil (40) zu steuern, um Brenngas (G') von der Brenngasquelle (3) über den zweiten Brenngaseinlass (41) zuzuführen, wenn der Motor (2) von einem inaktiven Zustand gestartet wird.

3. Vorrichtung nach Anspruch 1, die ferner einen Turbulenzgenerator (35) einschließt, der in dem Mischungszufuhrkanal (7) stromabwärts des zweiten Brenngaseinlasses (41) angeordnet ist.

4. Verfahren zum Zuführen eines Brenngases (G, G') von einer Brenngasquelle (3) zu einem Gasmotor (2), das einschließt:
Bereitstellen eines Nulldruckreglers (4),
einen Venturi-Mischer (20),
einen Mischungszufuhrkanal (7),
ein Ventil (40) und
eine Steuerung (30);
wobei der Venturi-Mischer (20) ein Spaltmischer ist und einen Strömungsweg (21) und einen ersten Brenngaseinlass (24) einschließt;
wobei der Strömungsweg (21) eine Lufteinlassregion (22) und eine Mischregion (23) stromabwärts der Lufteinlassregion (22) aufweist, wobei sich der Strömungsweg (21) in einem Abschnittsbereich von der Lufteinlassregion (22) zu der Mischregion (23) reduziert;
wobei der erste Brenngaseinlass (24) in die Mischregion (23) des Strömungswegs mündet;
Anordnen des Nulldruckreglers (4), um ein Brenngas (G) von der Brenngasquelle (3) zu dem ersten Brenngaseinlass (24) bei einem ersten statischen Druck zuzuführen, der im Wesentlichen gleich einem statischen Druck von Luft (A) ist, die der Lufteinlassregion (22) des Strömungswegs zugeführt wird;
Mischen des Brenngases (G), das von dem ersten Brenngaseinlass (24) strömt, mit der Luft (A), die aus der Lufteinlassregion (22) des Strömungswegs (21) strömt, um eine Mischung (M) von Brenngas und Luft in der Mischregion (23) auszubilden;
Anordnen des Mischungszufuhrkanals (7), um die Mischung (M) von Brenngas und Luft aufzunehmen, die aus der Mischregion (23) des Strömungswegs strömt;
Anordnen eines zweiten Brenngaseinlasses (41), um in den Mischungszufuhrkanal (7) stromabwärts der Mischregion (23) des Strömungswegs zu münden,
und Steuern des Ventils (40), um Brenngas (G') von der Brenngasquelle (3) mit einem zweiten statischen Druck, der höher als der erste statische Druck ist, über den zweiten Brenngaseinlass (41) zu der Mischung (M) von Brenngas und Luft zuzuführen, die aus der Mischregion (23) des Strömungswegs strömt;
Konfigurieren der Steuerung (30), um das Ventil (40) zu steuern, um die Zufuhr von Brenngas (G') aus der Brenngasquelle (3) über den zweiten Brenngaseinlass (41) während des Betriebs des Motors (2) als Reaktion auf einen erhöhten Lastzustand des Motors (2) einzuleiten oder zu erhöhen; und
**gekennzeichnet durch**
Ausbilden der Mischung (M) von Brenngas und Luft, die von der Mischregion (23) des Strömungswegs (21) mit einem Luft: Brenngas-Verhältnis von nicht mehr als 2,3 : 1 nach Volumen strömt; und
Anordnen des Strömungswegs (21) in der Mischregion (23), um im Wesentlichen ringförmig zu sein, und
Anordnen des ersten Brenngaseinlasses (24), um eine im Wesentlichen ringförmige Öffnung (24') zu umfassen, wobei die Öffnung (24') eine variable Länge in einer axialen Richtung des Strömungswegs (21) aufweist; und
Konfigurieren der Steuerung (30):
- um die Länge der Öffnung (24') zu steuern, um ein Luft: Brenngas-Verhältnis der Mischung (M), die von der Mischregion (23) des Strömungswegs (21) strömt, zu variieren, und während des Betriebs des Motors (2),
- um die Zufuhr von Brenngas (G') über den zweiten Brenngaseinlass (40) nur in einem maximal offenen Zustand des ersten Brenngaseinlasses (24) einzuleiten.

## Revendications

1. Appareil (1) pour fournir un gaz combustible (G, G') à partir d'une source de gaz combustible (3) à un moteur (2) à gaz, comportant :
un régulateur à pression nulle (4),
un mélangeur Venturi (20),
un conduit de fourniture de mélange (7),
une soupape (40), et
un dispositif de commande (30) ;
le mélangeur Venturi (20) étant un mélangeur à fente et comportant un trajet d'écoulement (21) et une première entrée de gaz combustible (24) ;
le trajet d'écoulement (21) ayant une région d'entrée d'air (22) et une région de mélange (23) en aval de la région d'entrée d'air (22), le trajet d'écoulement (21) diminuant dans une zone de section de la région d'entrée d'air (22) à la région de mélange (23) ;
la première entrée de gaz combustible (24) s'ouvrant dans la région de mélange (23) du trajet d'écoulement ;
le régulateur à pression nulle (4) étant agencé pour fournir un gaz combustible (G) à partir de la source de gaz combustible (3) à la première entrée de gaz combustible (24) à une première pression statique sensiblement égale à une pression statique d'air (A) fournie à la région d'entrée d'air (22) du trajet d'écoulement ;
la région de mélange (23) étant agencée pour mélanger le gaz combustible (G) s'écoulant de la première entrée de gaz combustible (24) avec l'air (A) s'écoulant de la région d'entrée d'air (22) du trajet d'écoulement (21) pour former un mélange (M) de gaz combustible et d'air ;
le conduit de fourniture de mélange (7) étant agencé pour recevoir le mélange (M) de gaz combustible et d'air s'écoulant de la région de mélange (23) du trajet d'écoulement ;
dans lequel une seconde entrée de gaz combustible (41) est agencée pour s'ouvrir dans le conduit de fourniture de mélange (7) en aval de la région de mélange (23) du trajet d'écoulement,
et la soupape (40) peut être commandée pour fournir du gaz combustible (G') à partir de la source de gaz combustible (3) à une seconde pression statique plus élevée que la première pression statique, par l'intermédiaire de la seconde entrée de gaz combustible (41), au mélange (M) de gaz combustible et d'air s'écoulant de la région de mélange (23) du trajet d'écoulement ;
le dispositif de commande (30) étant configuré pour commander la soupape (40) pour initier ou accroître la fourniture de gaz combustible (G') depuis la source de gaz combustible (3) par l'intermédiaire de la seconde entrée de gaz combustible (41), pendant le fonctionnement du moteur (2), en réponse à une condition de charge accrue du moteur (2) ;
**caractérisé en ce que**
le mélangeur Venturi (20) est agencé pour former le mélange (M) de gaz combustible et d'air s'écoulant de la région de mélange (23) du trajet d'écoulement (21) avec un rapport air/gaz combustible d'au plus 2,3:1 en volume ; et
le trajet d'écoulement (21) dans la région de mélange (23) est sensiblement annulaire, et
la première entrée de gaz combustible (24) comprend une ouverture (24') sensiblement annulaire, l'ouverture (24') ayant une longueur variable dans une direction axiale du trajet d'écoulement (21), la longueur de l'ouverture (24') pouvant être commandée pour faire varier un rapport air/gaz combustible du mélange (M) ; et
le dispositif de commande (30) est configuré pour commander la longueur de l'ouverture (24') pour faire varier un rapport air/gaz combustible du mélange (M) s'écoulant de la région de mélange (23) du trajet d'écoulement (21), et, pendant le fonctionnement du moteur (2), pour initier la fourniture de gaz combustible (G') par l'intermédiaire de la seconde entrée de gaz combustible (40) uniquement dans une condition d'ouverture maximale de la première entrée de gaz combustible (24).

2. Appareil selon la revendication 1, dans lequel le dispositif de commande (30) est en outre configuré pour commander la soupape (40) pour fournir du gaz combustible (G') à partir de la source de gaz combustible (3) par l'intermédiaire de la seconde entrée de gaz combustible (41) lorsque le moteur (2) est démarré à partir d'une condition inactive.

3. Appareil selon la revendication 1, comportant en outre un turbulateur (35) agencé dans le conduit de fourniture de mélange (7) en aval de la seconde entrée de gaz combustible (41).

4. Procédé de fourniture d'un gaz combustible (G, G') à partir d'une source de gaz combustible (3) à un moteur à gaz (2), comportant :
la fourniture d'un régulateur à pression nulle (4),
un mélangeur Venturi (20),
un conduit de fourniture de mélange (7),
une soupape (40), et
un dispositif de commande (30) ;
le mélangeur Venturi (20) étant un mélangeur à fente et comportant un trajet d'écoulement (21) et une première entrée de gaz combustible (24) ;
le trajet d'écoulement (21) ayant une région d'entrée d'air (22) et une région de mélange (23) en aval de la région d'entrée d'air (22), le trajet d'écoulement (21) diminuant dans une zone de section de la région d'entrée d'air (22) à la région de mélange (23) ;
la première entrée de gaz combustible (24) s'ouvrant dans la région de mélange (23) du trajet d'écoulement ;
l'agencement du régulateur à pression nulle (4) pour fournir un gaz combustible (G) à partir de la source de gaz combustible (3) à la première entrée de gaz combustible (24) à une première pression statique sensiblement égale à une pression statique d'air (A) fournie à la région d'entrée d'air (22) du trajet d'écoulement ;
le mélange du gaz combustible (G) s'écoulant de la première entrée de gaz combustible (24) avec l'air (A) s'écoulant de la région d'entrée d'air (22) du trajet d'écoulement (21) pour former un mélange (M) de gaz combustible et d'air dans la région de mélange (23) ;
l'agencement du conduit de fourniture de mélange (7) pour recevoir le mélange (M) de gaz combustible et d'air s'écoulant de la région de mélange (23) du trajet d'écoulement ;
l'agencement d'une seconde entrée de gaz combustible (41) pour s'ouvrir dans le conduit de fourniture de mélange (7) en aval de la région de mélange (23) du trajet d'écoulement,
et la commande de la soupape (40) pour fournir du gaz combustible (G') à partir de la source de gaz combustible (3) à une seconde pression statique plus élevée que la première pression statique, par l'intermédiaire de la seconde entrée de gaz combustible (41), au mélange (M) de gaz combustible et d'air s'écoulant de la région de mélange (23) du trajet d'écoulement ;
la configuration du dispositif de commande (30) pour commander la soupape (40) pour initier ou accroître la fourniture de gaz combustible (G') depuis la source de gaz combustible (3) par l'intermédiaire de la seconde entrée de gaz combustible (41), pendant le fonctionnement du moteur (2), en réponse à une condition de charge accrue du moteur (2) ; et
**caractérisé par**
la formation du mélange (M) de gaz combustible et d'air s'écoulant de la région de mélange (23) du trajet d'écoulement (21) avec un rapport air/gaz combustible d'au plus 2,3:1 en volume ; et
l'agencement du trajet d'écoulement (21) dans la région de mélange (23) pour qu'il soit sensiblement annulaire, et
l'agencement de la première entrée de gaz combustible (24) pour comprendre une ouverture (24') sensiblement annulaire, l'ouverture (24') ayant une longueur variable dans une direction axiale du trajet d'écoulement (21) ; et
la configuration du dispositif de commande (30) :
- pour commander la longueur de l'ouverture (24') pour faire varier un rapport air/gaz combustible du mélange (M) s'écoulant de la région de mélange (23) du trajet d'écoulement (21), et, pendant le fonctionnement du moteur (2),
- pour initier la fourniture de gaz combustible (G') par l'intermédiaire de la seconde entrée de gaz combustible (40) uniquement dans une condition d'ouverture maximale de la première entrée de gaz combustible (24).
